(19) Europäisches Patentamt
European Patent Office
Office européen des brevets

(11) **EP 2 568 432 A1**

(12) **EUROPEAN PATENT APPLICATION**

(43) Date of publication:
**13.03.2013 Bulletin 2013/11**

(51) Int Cl.:
***G06Q 30/02*** *(2012.01)*

(21) Application number: **12183819.7**

(22) Date of filing: **11.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.09.2011 US 201113229886**

(71) Applicant: **Toluna USA, Inc.**
**Wilton, CT (US)**

(72) Inventors:
• **Babila, Dvir**
**49493 TEL-AVIV (IL)**

• **Benattar, Gary**
**92300 LEVALLOIS-PERRET (FR)**
• **Golan, Shimon**
**HAIFA 32922 (IL)**
• **Alush, Royi**
**52503 RAMAT GAN (IL)**
• **Weingarten, Tomer**
**49240 PELAH TIKVA (IL)**
• **Smadja, Frank**
**34951 HAIFA (IL)**

(74) Representative: **Bongiovanni, Simone et al**
**Studio Torta S.p.A.**
**Via Viotti, 9**
**10121 Torino (IT)**

(54) **REAL-TIME SURVEY ACTIVITY MONITOR**

(57) Exemplary embodiments are directed to generating temporal indicators with respect to web-based survey responses. Exemplary embodiments identify quantity information and temporal information associated with responses to a web-based survey. The temporal indicator is generated based on the quantity information and the temporal information.

**FIG. 1**

EP 2 568 432 A1

**Description**

BACKGROUND

Organizations are typically interested in obtaining valuable customer insight to assist in development of products and/or services, determine whether customers are satisfied, test advertising concepts and/or website effectiveness, and the like. In some instances, organizations obtain valuable customer insight using surveys and/or other market research techniques. For example, online web-based surveys provide organizations with an efficient environment for quickly reaching their target audience. Web-based surveys can allow organizations to view survey results as they become available. For example, when a respondent completes the survey, the respondent's answers to the questions in the survey can be processed and/or viewed by the organization that solicited the feedback.

While survey results are typically available upon completion of the surveys by respondents, organizations typically cannot determine response rates associated with the surveys. In this regard, organizations typically cannot determine whether the surveys have been effectively distributed to a target audience, whether the surveys are productive and/or whether interest in the surveys is and remains strong. Determining response rates may allow organizations to update and/or modify the surveys and/or provide incentives to increase the rate of response.

SUMMARY

In one aspect, a method for generating temporal indicators with respect to web-based survey responses is disclosed. The method includes identifying quantity information associated with survey responses and identifying temporal information associated with the survey responses. The method further includes generating a temporal indicator based on the quantity information and the temporal information.

In another aspect, a non-transitory computer readable medium storing instructions is disclosed, wherein execution of the instructions by a processing device causes the processing device to implement a method for generating temporal indicators with respect to web-based survey responses. The method implemented by execution of the instructions includes identifying quantity information associated with responses to a web-based survey and identifying temporal information associated with the responses. The method implemented by execution of the instructions further includes generating a temporal indicator based on the quantity information and the temporal information.

In yet another aspect, a system for generating temporal indicators with respect to web-based survey responses is disclosed. The system includes a computer storage device and a processing device. The computer storage device stores quantity information and temporal information associated with web-based survey responses. The processing device generates a temporal indicator based on the quantity information and the temporal information.

Other objects and features will become apparent from the following detailed description considered in conjunction with the accompanying drawings. It is to be understood, however, that the drawings are designed as an illustration only and not as a definition of the limits of the invention.

BRIEF DESCRIPTION OF THE DRAWINGS

Figure 1 is an exemplary time-based survey activity monitor system.

Figure 2 is a block diagram of an exemplary computing device configured to implement embodiments of a time-based survey activity monitor system.

Figure 3 is a computing system for implementing embodiments of a time-based survey activity monitor system.

Figure 4 is an exemplary graphical user interface that can be generated by embodiments of a time-based survey activity monitor system.

Figure 5 is another exemplary graphical user interface that can be generated by embodiments of a time-based survey activity monitor system.

Figure 6 is a flowchart illustrating an exemplary process performed using embodiments of a time-based survey activity monitor system.

DESCRIPTION OF EXEMPLARY EMBODIMENTS

Exemplary embodiments of the present disclosure are directed to generating temporal indicators associated with survey responses. The temporal indicators can provide a surveying entity valuable insight into the productivity and effectiveness of surveys and/or can measure interest in the survey over time. Exemplary embodiments can implement a time-based survey activity monitoring system to generate the temporal indicators based on temporal information associated with the survey responses. Exemplary temporal indicators can include, for example, a survey completion speed indicator, a live update indicator, an average response speed indicator and/or a response activity indicator.

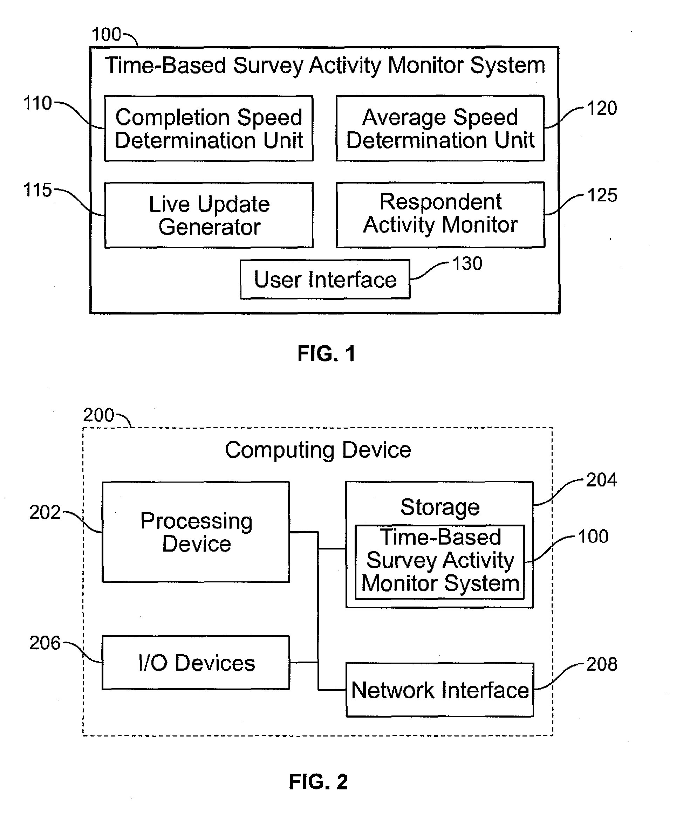

Figure 1 provides a schematic/flowchart depiction of an exemplary time-based survey activity monitoring system 100 (hereinafter "system 100"). The system 100 can include a completion speed determination unit 110, a live update generator 115, an average speed determination unit 120, a respondent activity monitor 125, and a graphical user interface 130 (hereinafter "GUI 130"). The system 100 can monitor quantity and temporal information associated with responses to one or more surveys. The one or more surveys can be online, web-based surveys hosted on one or more web pages served by one or more web servers. The system 100 can be in communication with the web servers and/or can be implemented by one or more of the web servers. The system 100 can receive notifications when responses to the one or more surveys are entered or completed.

In some embodiments, the notification can indicate that a survey response was entered or completed and/or can include the survey response itself. Using the notification information, the system 100 is generally programmed to generate quantity information associated with the survey responses. In some embodiments, the notification can include temporal information, such as a date and/or time the response was entered or completed. In some embodiments, the system 100 can associate temporal information with an entry or completion time of the survey by a respondent based on when the notification was received.

Using the quantity information and the temporal information, the system 100 can generate temporal indicators. For example, the system 100 can generate a temporal indicator based on a quantity of responses that were entered or completed within a specified time period. The system can continuously and/or periodically update the temporal indicators to provide a real-time and accurate status regarding responses to the one or more surveys. The temporal indicators can be made available to the surveying entity so that the entity can monitor and/or determine the productivity, effectiveness, interest level, and the like, associated with the one or more surveys. The temporal indicators can include, for example, a survey completion speed indicator, a live update indicator, an average completion speed indicator, and a response activity indicator.

The completion speed determination unit 110 is generally programmed to determine a completion speed associated with the one or more surveys 140. In some embodiments, the completion speed can be determined using the following mathematical equation:

$$\text{Completion Speed} = (\text{RPO} * 3600) / \text{TFPO}, \qquad (1)$$

where RPO refers to a total quantity of responses to the survey by respondents since the survey was initiated, and TFPO refers to a quantity of time (e.g., in seconds) that has elapsed since the first response to the survey. The completion speed can have units of respondents per time (e.g., respondents per hour), where there is a one-to-one correspondence between survey response and survey respondents. The completion speed can be updated in real-time to provide a surveying entity with an up-to-date and accurate completion speed. For example, the completion speed determination unit 110 can be configured to compute the completion speed every P seconds. In some embodiments, P can be set to a default value, e.g., a default value of 5 seconds.

The live update generator 115 is generally programmed to generate a live update indicator to provide real-time feedback to the surveying entity. The live update indicator can track response quantities being entered contemporaneously by respondents. For example, the live update indicator can indicate the quantity of responses that were just entered for the one or more surveys. The live update generator 115 can include the quantity of response that were entered or completed within the last second or seconds, minute or minutes, hour or hours, and the like. The live update generator 115 can use the following equation to generate the live update indicator.

$$\text{Live Update Indicator} = R(T) / T, \qquad (2)$$

where T corresponds to a window of time for which responses are included in the computation of the live update indicator, R(T) correspond a total number of responses within window of time. The window of time T shifts as with time so that the window of time includes the most recent responses immediately preceding the present time. By adjusting the window of time as time passes, the live update generator 115 can ensure that the live update indicator is accurate and up-to-date to provide the surveying entity with a snapshot of responses being recently and contemporaneously entered.

The average speed determination unit 120 can generate an average completion speed for survey responses occurring within a specified period of time, In some embodiments, the specified period of time can be a minute, hour, day, week, month, year, and the like, and can depend on, for example, the duration over which the survey is available for response. To determine the average speed, the unit 120 specifies a short history time period and an overall history time period, where the short history time period is a sub-period within the overall history time period. For example, the overall history time period can be one month and the short history time period can correspond to the most recent hour or day within the overall time period. While an exemplary short and overall history time periods have been provided, those skilled in the art will recognize that short and overall history time periods can be specified as any value so long as the short history time period does not exceed the overall history time period.

The average speed determination unit 120 determines whether there is any recent activity (i.e. survey responses) within the short history time period. If there is recent activity, the average speed determination unit 120 can compute the average speed using the following equation:

$$\text{Average Speed} = R(SH) / (TL(SH) - TF(SH)), \qquad (3)$$

where SH corresponds to the short history time period, R(SH) correspond a total number of responses within the short history time period, TL(SH) refers to a time at which the last response was received within the short history time period, and TF(SH) refers to a time at which the first response was received within the short history time period. In some embodiments, if no activity occurred in the short history time period, the short history time period can be incrementally increased until activity is detected at which point equation (3) can be used to compute the average speed.

If there is no recent activity (i.e. no activity within the short history time period), the average speed determination unit 120 can determine whether there is any activity (i.e. survey responses) within the overall history time period. If there is activity within the overall history time period, but not the short history time period, the average speed determination unit 120 can compute the average speed using the following equation:

$$\text{Average Speed} = R(H) / (TL(H) - TF(H)), \qquad (4)$$

where H corresponds to the overall history time period, R(H) correspond a total number of survey responses within the overall history time period, TL(H) refers to a time at which the last survey response within the overall history time period was received, and TF(H) refers to a time at which the first survey response within the overall history time period. The average speed can have units of respondents per time value, such as responses per second, minute, hour, day, week, month, and the like, where there is a one-to-one correspondence between survey responses and survey respondents. In the event that there has been no activity within either the short history time period or the overall history time period, the average speed determination unit 120 determines that the average speed is zero.

The response activity monitor 125 is generally programmed to generate a response activity indicator. The response activity indicator can provide a history of the quantity of responses received over time for the one or more surveys. In some embodiments, the response activity monitor 125 can generate a graph to show a quantity of survey responses over time. For example, the graph can illustrate a quantity of responses occurring on each day in within the specified period of time, such as a week, month, year, and the like. The response activity monitor 125 allows a surveying entity to review the quantity of responses over time. Using the response activity indicator, the surveying entity can identify periods in time for which the most responses were being entered and/or for which the least responses were being entered, as well as other items of interest.

The GUI 130 can be used to display the temporal indicators generated by the completion speed determination unit 110, the live update generator 115, the average speed determination unit 120 and/or the response activity monitor 125, and can allow the surveying entity and/or other observers to view the temporal indicators. For example, using the temporal indicators, the surveying entity can determine whether the one or more surveys are being effectively and productively distributed to a target audience, whether there is sufficient interest in the surveys and/or whether modifications should be made to the surveys to increase the quantity and/or frequency of responses to the surveys.

Figure 2 is a block diagram of an exemplary computing device 200 configured to implement some embodiments of the system 100. The computing device 200 can be a mainframe, personal computer (PC), laptop computer, workstation, server, handheld device, such as a portable digital assistant (PDA), and the like. In the illustrated embodiment, the computing device 200 includes a processing device 202, such as a central processing device, and can include storage 204. The computing device 200 can further include input/output devices 206, such as a display device, keyboard, touch screen, mouse, printer, and the like, and can include a network interface 208 to facilitate communication between the computing device 200 and other devices communicative coupled to a network.

The storage 204 stores data and instructions and can be implemented using non-transitory computer readable medium technologies, such as a floppy drive, hard drive, tape drive, Flash drive, optical drive, read only memory (ROM), random access memory (RAM), and the like. For example, the storage 204 can store quantity information associated with response to surveys, temporal information associated with response to surveys, temporal indicators generated by the system 100, and the like. Applications, such as an embodiment of the system 100, or portions thereof, can be resident in the storage 204 and can include instructions for implementing the applications. The storage 204 can be local or remote to the computing device 200. The processing device 202 operates to run the applications in storage 204, such as the system 100, by executing instructions therein and storing data resulting from the executed instructions, which may be presented to a user via the GUI 130.

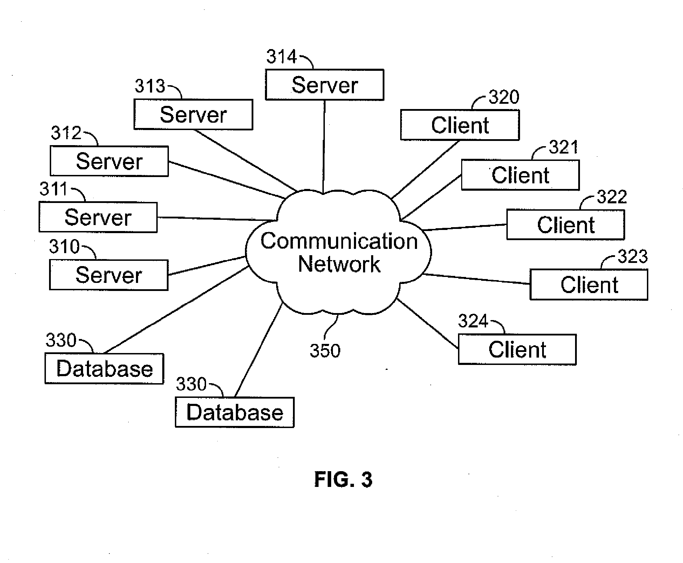

Figure 3 is a block diagram of an exemplary computing system 300 configured to implement one or more embodiments of the system 100. The computing system 300 includes servers 310-314 operatively coupled to clients 320-324, via a communication network 350, which can be any network over which information can be transmitted between devices communicatively coupled to the network. For example, the communication network 350 can be the Internet, Intranet, virtual private network (VPN), wide area network (WAN), local area network (LAN), and the like. The computing system 300 can include repositories or database devices 330, which can be operatively coupled to the servers 310-314, as well as to clients 320-324, via the communications network 350. The servers 310-314, clients 320-324, and database devices 330 can be implemented as computing devices. Those skilled in the art will recognize that the database devices 330 can be incorporated into one or more of the servers 310-314 such that one or more of the servers can include databases.

In exemplary embodiments, the system 100 can be distributed among different devices (e.g., servers, clients, databases) in the communication network 350 such that one or more components of the system 100, or portions thereof, can be implemented by different devices in the communication network 350. For example, in illustrative embodiments, the completion speed determination unit 110, the live update generator 115, the average speed determination unit 120, and the respondent activity monitor can be implemented by the server 310, and the GUI 130 can be implemented by the server 311.

In an exemplary embodiment, servers 310-314 can be web servers configured to host web pages. Server 310 can be configured to implement the system 100 and servers 311-314 can be configured to host surveys. Client 320 can represent the surveying entity and clients 321-324 can represent survey respondents. The database devices 330 can be configured to store surveys, survey responses, quantity information associated with survey responses, temporal information associated with survey responses, temporal indicators, survey results, and the like. In an exemplary operation, the respondents can access and respond to the surveys hosted by the servers 311-314 using a web browser implemented by the client devices. Upon completion of the surveys by the respondents, the servers 311-314 can be configured to notify the system 100 implemented by the server 310. Alternatively, the system 100 can be configured to periodically poll the servers 311-314 for survey responses. As yet another alternative, the servers 311-314 can store survey responses in the database devices 330 and the server 310 can query the database to determine quantity and temporal information associated with the survey responses. Using this information, the system can identify quantity and temporal information associated with the responses to the surveys entered by the respondents via the client devices 321-324 and can generate temporal indicators. The surveying entity can access the GUI 130 of the system 100 implemented by the server 310 using a web browser implemented by the client 320 and can review the temporal indicators.

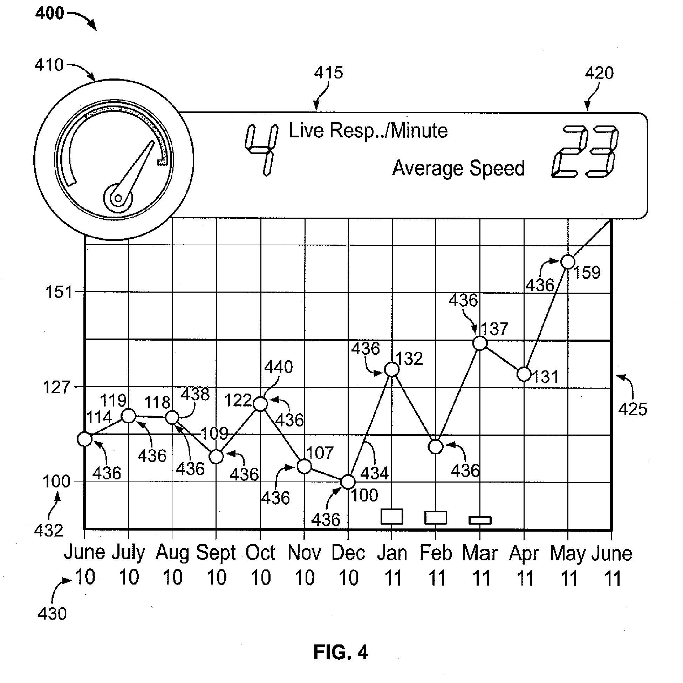

Figure 4 is an exemplary graphical user interface 400 (hereinafter "GUI 400") that can be generated according to exemplary embodiments of the system 100. The GUI 400 can include a completion speed indicator 410, a live update indicator 415, an average speed indicator 420, and a response activity indicator 425. In the present embodiment, the completion speed indicator 410 is an emulated speed gauge having a needle that rotates about a pivot point in response to the value of the completion speed determined by the completion speed determination unit 110 (Figure 1), such that the position of the needle is based on the value of the computed completion speed. The live update indicator 415 is displayed as a number of responses being completed contemporaneously in real-time determined by the live update generator 115. The average speed indicator 420 is displayed a number corresponding to the average speed computed by the average speed determination unit 120 (Figure 1).

In the present embodiment, the response activity indicator 425 is illustrated as a graph having an x-axis 430 corresponding to time and a y-axis 432 corresponding to a quantity of survey responses. The survey responses can be plotted to form a survey response curve 434 having points 436 corresponding to a quantity of survey responses completed with respect to a corresponding time. For example, a point 438 can correspond to a quantity of 118 survey responses for the month of August in the year of 2010 and the point 440 can correspond to a quantity of 122 survey responses for the month of October in the year 2010.

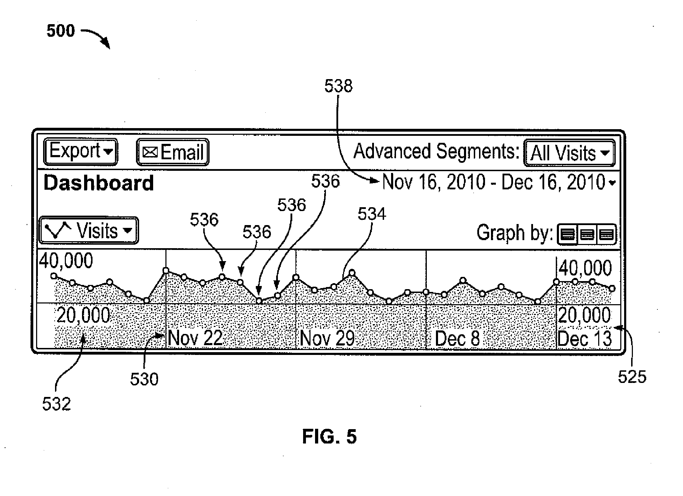

Figure 5 is another exemplary graphical user interface 500 that can be generated by embodiments of the system 100. The GUI 500 a response activity indicator 525. In the present embodiment, the response activity indicator 525 is illustrated as a graph having an x-axis 530 corresponding to time and a y-axis 532 corresponding to a quantity of survey responses. The survey responses can be plotted to form a survey response curve 534 having points 536 corresponding to a quantity of survey responses completed with respect to a corresponding time. The graph can include a range 538 of time. In the present embodiment, the range 538 of time is one month. The graph can be updated daily such that the graph can represent the response activity corresponding to the previous thirty days or one month time period. For example, the graph illustrated in Figure 5 would have been generated at the end of December 16, 2010, the last day in the range 538 of time in the present example.

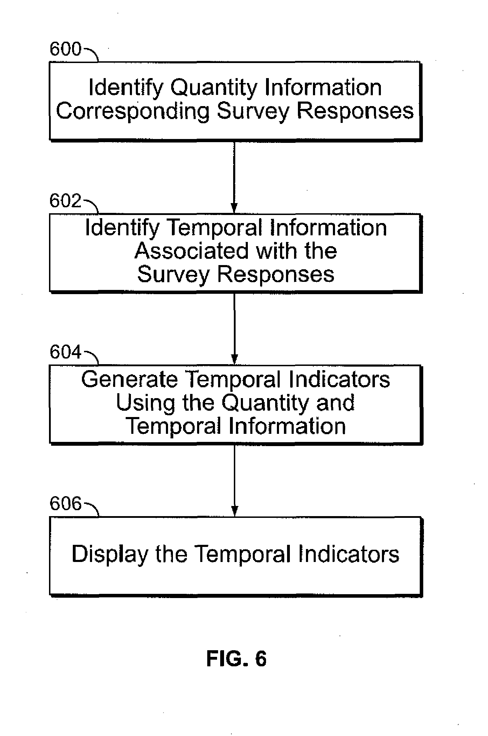

Figure 6 is a flowchart illustrating an exemplary process performed using the system 100. To begin, the system identifies response quantities corresponding survey responses associated with one or more surveys created by a surveying entity (600) and identifies temporal information associated with the survey responses (602). Using the quantity and temporal information, the system generates one or more temporal indicators, such as the completion speed, the live update indicator, the average speed, and the response activity indicator (604). To view the one or more temporal indicators, the surveying entity can access a graphical user interface provided by the system and the system can display the one or more temporal indicators using the graphical user interface (606).

While exemplary embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the spirit and scope of the invention.

**Claims**

1. A method for generating temporal indicators with respect to web-based survey responses, the method comprising:

   identifying quantity information associated with responses to a web-based survey;
   identifying temporal information associated with the responses; and
   generating a temporal indicator based on the quantity information and the temporal information.

2. The method of Claim 1, wherein the temporal indicator is a completion speed and generating the temporal indicator comprises:

   determining a quantity of time that elapsed since a first response to the survey was completed;
   determining a quantity of survey responses completed within the quantity of time; and
   dividing the quantity of survey responses by the quantity of time.

3. The method of Claim 1, wherein the temporal indicator is a live response update indicator and generating a temporal indicator comprises:

   identifying a window of time;
   determining a quantity of survey responses completed within the window of time; and
   dividing the quantity of survey responses by a length of the window in time.

4. The method of Claim 1, wherein the temporal indicator is an average speed and generating the temporal indicator comprises:

   defining a first time period; and
   determining whether responses were completed within the first time period.

5. The method of Claim 4, wherein generating an average speed further comprises:

   identifying a last time at which a response was received within the first time period;
   identifying a first time at which a response was received within the first time period;
   subtracting the last time from the first time to generate a length of time; and
   dividing a quantity of responses completed within the first time period by the length of time.

6. The method of Claim 1, wherein the temporal indicator is a response activity indicator and generating the temporal indicator comprises:

   plotting quantities of responses with respect times at which the responses were completed.

7. The method of Claim 1, further comprising:

    displaying the temporal indicator in a graphical user interface.

8. A system for generating temporal indicators with respect to web-based survey responses, the system comprising:

    a computer storage device to store quantity information and temporal information associated with web-based survey responses; and
    a processing device configured to generate a temporal indicator based on the quantity information and the temporal information.

9. The system of Claim 8, wherein the temporal indicator is a completion speed and the processing device is configured to determine a quantity of time that elapsed since a first response to the survey was completed, determine a quantity of survey responses completed within the quantity of time, and divide the quantity of survey responses by the quantity of time.

10. The system of Claim 8, wherein the temporal indicator is a live response update indicator and the processing device is configured to identify a window of time, determine a quantity of survey responses completed within the window of time, and divide the quantity of survey responses by a length of the window in time.

11. The system of Claim 8, wherein the temporal indicator is an average speed and the processing device is configured to define a first time period and determine whether survey responses were completed within the first time period.

12. The system of Claim 11, wherein the processing device is configured to identify a last time at which a response was received within the first time period, identify a first time at which a response was received within the first time period, subtract the last time from the first time to generate a length of time, and divide a quantity of responses completed within the first time period by the length of time.

13. The system of Claim 8, wherein the temporal indicator is a response activity indicator and the processing device is configured to plot quantities of responses with respect a time at which the responses were completed.

14. The system of Claim 8, wherein the processing device is configured to display the temporal indicator in a graphical user interface.

100

**Time-Based Survey Activity Monitor System**

110

Completion Speed Determination Unit

Average Speed Determination Unit

120

115

Live Update Generator

Respondent Activity Monitor

125

User Interface

130

**FIG. 1**

200

**Computing Device**

202

Processing Device

Storage

204

Time-Based Survey Activity Monitor System

100

206

I/O Devices

Network Interface

208

**FIG. 2**

FIG. 3

**FIG. 4**

500

538

Export ▾    ✉ Email                    Advanced Segments: All Visits ▾

**Dashboard**                    536  → Nov 16, 2010 - Dec 16, 2010 ▾
                              536
                                         534
⋀ Visits ▾        536              536              Graph by: ▤ ▤ ▤
                        536
40,000                                                    40,000

20,000                                                    20,000
            ▸ Nov 22         Nov 29         Dec 8     Dec 13

532          530                                             525

**FIG. 5**

600 —

Identify Quantity Information
Corresponding Survey Responses

602 —

Identify Temporal Information
Associated with the
Survey Responses

604 —

Generate Temporal Indicators
Using the Quantity and
Temporal Information

606 —

Display the Temporal Indicators

**FIG. 6**

Europäisches
Patentamt

European
Patent Office

Office européen
des brevets

# EUROPEAN SEARCH REPORT

Application Number

EP 12 18 3819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-14 | INV. G06Q30/0201 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 21 November 2012 | Marcu, Antoniu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)